# EUROPÄISCHE PATENTSCHRIFT

(11) **EP 1 663 735 B1**
(45) Veröffentlichungstag und Bekanntmachung des Hinweises auf die Patenterteilung: **21.02.2007**
(21) Anmeldenummer: 04765534.5
(22) Anmeldetag: 23.09.2004
(51) Int. Cl.: B60R 21/34, E05D 3/06

(54) **ANORDNUNG EINER FRONTKLAPPE AN EINEM FAHRZEUG**
ARRANGEMENT OF A FRONT GATE ON A VEHICLE
DISPOSITIF D'UN CAPOT AVANT SUR UN VEHICULE

(30) Priorität: 23.09.2003 DE 10343882
(43) Veröffentlichungstag der Anmeldung: 07.06.2006
(73) Patentinhaber: Kirchhoff GmbH & Co. KG., 58553 Halver (DE)
(72) Erfinder: GUST, Peter, 58849 Herscheid (DE)
(74) Vertreter: Schneider, Uwe
(86) Internationale Anmeldenummer: PCT/EP2004/010674
(87) Internationale Veröffentlichungsnummer: WO 2005/030539

(56) Entgegenhaltungen:
- DE-A- 2 814 107
- DE-A- 10 055 828
- DE-A- 19 712 961
- DE-A1- 10 111 146
- DE-U- 20 314 673

## Beschreibung

Die Erfindung betrifft eine Anordnung einer Frontklappe an einem Fahrzeug gemäß Oberbegriff des Anspruches 1.

Zur Verbesserung des Schutzes insbesondere von Fußgängern, die mit einem Fahrzeug in Standard-Unfallsituation kollidieren können, ist es seit einiger Zeit bekannt, an den Fahrzeugen durch verschiedenartige Einrichtungen dafür zu sorgen, daß die Aufprallzone des Fußgängers an dem Fahrzeug, üblicherweise im Bereich der Frontklappe, weicher ausgestaltet und daher der Aufprall des Fußgängers auf der Frontklappe abgemildert wird. Hierzu ist es beispielsweise beschrieben worden, in diesem Bereich Prallsäcke ähnlich wie dem Airbag im Inneren des Fahrzeuges vorzusehen, die durch entsprechende Sensoren im Frontbereich des Fahrzeuges ausgelöst werden, wenn eine Kollision detektiert wird.

Eine andere Lösung besteht darin, die Frontklappe des Fahrzeuges durch geeignete Maßnahmen vor dem Aufprall des Fußgängers aus ihrer Ruhelage knapp oberhalb des Motorblocks in eine Stellung zu verbringen, die einen größeren Abstand gegenüber den steifen Teilen des Fahrzeuges und insbesondere des Motorblocks aufweist. Hierzu wird vorgeschlagen, die Frontklappe in ihrem hinteren Bereich aufzustellen und dadurch eine gezielte Verformung der Frontklappe beim Aufprall des Fußgängers zu gewährleisten.

Zur Lösung dieses Grundgedankens ist eine Vielzahl von technischen Einrichtungen vorgeschlagen worden. So ist es beispielsweise aus der DE 2 814 107 A1 bekannt, eine spezielle Vorrichtung im hinteren Bereich der Frontklappe anzuordnen, die die Frontklappe in sehr kurzer Zeit gegenüber ihrer Ruhestellung anhebt, sofern ein entsprechender Aufprall detektiert wird. Weiterhin ist es beispielsweise aus der DE 197 12 961 A1 bekannt, hierfür die ohnehin zur normalen Betätigung der Frontklappe benötigte Scharniereinrichtung, die heute hauptsächlich in Form von Viergelenk-Scharnieren ausgebildet ist, derart zu modifizieren, daß eine zusätzliche Stellbewegung das Viergelenk-Scharnier im Falle einer Kollision aus seiner Ruhelage derart auslenkt, daß die an dem Viergelenk-Scharnier angelenkte Frontklappe angehoben wird. Hierzu dient ein Energiespeicher in Form einer Schraubenfeder, die vorgespannt unterhalb des Viergelenk-Scharniers angeordnet ist und bei einer Kollision aus ihrer vorgespannten Stellung ausgelöst und schlagartig entspannt wird. Die Schraubenfeder wirkt hierbei auf einen Hebel ein, der die beiden karosserieseitigen Gelenke des Viergelenk-Scharniers anhebt und damit das gesamte Viergelenk-Scharnier sowie die daran angelenkte Frontklappe anhebt.

Weiterhin ist es aus der DE 101 44 811 A1 bekannt, einen entsprechenden Energiespeicher statt auf einen unterseitig des Viergelenk-Scharniers angeordneten Hebel einwirken zu lassen, hierfür weitere Hebel an dem Viergelenk-Scharnier anzuordnen, deren Lage durch die schlagartige Freigabe des Energiespeichers zusätzliche Bewegungen des Viergelenk-Scharniers hervorrufen und damit größere Hübe der Frontklappe zu bewirken. Derartige Hilfslenker vorkomplizieren aber die Kinematik des Viergelenk-Scharniers.

Aufgabe der vorliegenden Erfindung ist es daher, eine Anordnung einer Frontklappe an einem Fahrzeug derart weiterzubilden, daß eine einfach wirkende Scharniereinrichtung geschaffen wird, die im Falle eines Fußgängeraufpralls auf die Frontklappe eine schnelle und sichere Anhebung des hinteren Bereichs der Frontklappe ermöglicht und dabei konstruktiv einfach und zuverlässig aufgebaut ist.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung geht aus von einer Anordnung einer Frontklappe an einem Fahrzeug, mit zumindest einer in Fahrtrichtung betrachtet hinten liegenden Scharniereinrichtung in Form eines Viergelenkes mit einem langen und einem kurzen Lenker, wobei mittels der Scharniereinrichtung die Frontklappe beim normalen Öffnen und Schließen verschwenkbar und bei einer Kollision des Fahrzeugs im hinteren Bereich anhebbar ist. Eine derartige gattungsgemäße Anordnung einer Frontklappe wird dadurch weiter gebildet, daß die Scharniereinrichtung einen Energiespeicher aufweist, der bei einer Kollision des Fahrzeugs eine Verstelleinrichtung betätigt, die wiederum direkt auf die Frontklappe einwirkt und mit dieser in lösbarer Verbindung steht, wobei die frontklappenseitigen Gelenke des Viergelenks gelenkig an einem Schwenkhebel festgelegt sind, der im Ruhezustand mit einem Ende lösbar an der Frontklappe festgelegt und mit seinem anderen Ende um ein im Bereich der Anlenkung der Verstelleinrichtung an der Frontklappe angeordnetes Drehgelenk relativ zur Frontklappe verschwenkbar ist, und die Verstelleinrichtung bei einer Kollision des Fahrzeugs die Frontklappe, geführt durch die Lenker des Viergelenks und den einseitig von der Frontklappe sich lösenden Schwenkhebel, gegenüber dem Ruhezustand anhebt. Eine derartige erfindungsgemäße Anordnung ermöglicht es, eine direkte Verstellung der Frontklappe durch die unmittelbare Einwirkung der Verstelleinrichtung auf die Frontklappe selbst zu bewirken, die ohne aufwendige Zwischenglieder auskommt und daher auch nach langem Stillstand bzw. Nicht-Betätigung sicher funktioniert. Die normale Funktion der Frontklappe beim Öffnen wird durch die Anordnung nicht verändert und erfolgt daher in gewohnter Weise und ohne Veränderungen für den Benutzer. Die lösbare Festlegung des Schwenkhebels an der Frontklappe wird hierbei erst im Falle einer Kollision gelöst und erst dadurch die zusätzliche Kinematik für die Anhebung der Frontklappe im hinteren Bereich im Falle einer Kollision mit einem Fußgänger oder dgl. bereitgestellt. Gleichzeitig wird bei der Ausführung dieser zusätzlichen Anhebungsbewegung die Frontklappe weiterhin sicher geführt und kann daher auch nur im konstruktiv vorgebbaren Umfang angehoben werden. Eine Beeinträchtigung der Sicht des Fahrers des Fahrzeuges durch die Frontklappe ist dadurch auch im Falle der Kollision sicher ausgeschlossen.

In einer ersten vorteilhaften Weiterbildung ist der Schwenkhebel mit seinem einen Ende derart lösbar an der Frontklappe festgelegt ist, daß er bei Überschreiten einer vorgebbaren Kraft in Richtung auf die Lageänderung der Verstelleinrichtung bei der Auslösung des Energiespeichers seine lösbare Verbindung mit der Frontklappe löst und um sein andernends an der Frontklappe angeordnetes Drehgelenk verschwenkbar ist. Hierdurch ist gewährleistet, daß der Schwenkhebel nicht schon durch kleinere Belastungen beispielsweise beim Durchfahren von Schlaglöchern oder dgl. seine feste Verbindung zu der Frontklappe lösen kann, sondern erst dann, wenn beispielsweise durch das Einwirken des Energiespeichers auf die Frontklappe ein entsprechender Schwellenwert der Belastung überschritten wird. Hierdurch wird dann die zusätzliche Bewegungsmöglichkeit der Scharniereinrichtung freigesetzt und das Aufstellen der Frontklappe im hinteren Bereich ermöglicht. Von Vorteil ist es hierbei, wenn der Schwenkhebel mit einem Ende über eine kraftschlüssige Verbindung an der Frontklappe festgelegt ist. Eine derartige kraftschlüssige Verbindung kann beispielsweise durch eine mechanische Rastverbindung gebildet sein, bei der eine Funktionskante an dem Schwenkhebel eine frontklappenseitig angeordnete Gegenform hintergreift und mit dieser im normalen Ruhezustand der Frontklappe verrastet ist. Eine derartige Rastverbindung ist konstruktiv einfach umzusetzen und auch bei langer Nicht-Betätigung immer wieder sicher zu lösen, so daß auch nach jahrelangem Nicht-Betrieb der Scharniereinrichtung im Sinne eines Unfallsschutzes die Betätigung immer sicher gewährleistet ist. Auch kann durch entsprechende Einstelleinrichtungen dafür gesorgt werden, daß die Kraft zum Lösen der Rastverbindung vorgegebene Werte genau einhält und damit die Betriebssicherheit erhöht wird.

In einer anderen Ausgestaltung ist es denkbar, daß die Gegenform an einem separaten Bauteil gebildet ist, das an der Frontklappe beweglich und/oder federnd festgelegt ist. Durch eine derartige Gestaltung können beispielsweise größere Beweglichkeiten oder genauer einstellbare Kraftwirkungen erreicht werden, insbesondere wenn in weiterer Ausgestaltung das separate Bauteil durch die von dem Energiespeicher ausgelöste Verstelleinrichtung betätigbar ist, wenn sich bei einer Kollision die Verstelleinrichtung aus ihrer Ruhestellung bewegt und dabei die kraftschlüssige Verbindung des Schwenkhebels mit der Frontklappe löst. Hierdurch ist immer sicher gewährleistet, daß eine ausreichend große Kraft auf das separate Bauteil einwirkt und damit ein sicheres Lösen des Schwenkhebels von der Frontklappe gewährleistet ist.

Eine vorteilhafte Weiterbildung sieht vor, daß das frontklappenseitige Ende der Verstelleinrichtung über eine pfannenartige Aufnahme mit einem im wesentlichen bolzenartigen Abschnitt an der Frontklappe in kraftschlüssiger Verbindung steht. Eine derartige pfannenartige Aufnahme hat den Vorteil, einerseits kinematisch bestimmt eine Lagerung des im wesentlichen bolzenartigen Abschnittes an der Frontklappe zu ermöglichen und gleichzeitig auch nach längerer Nicht-Betätigung ein sicheres Lösen von pfannenartiger Aufnahme und bolzenartigem Abschnitt voneinander zu gewährleisten. Dies ist insbesondere vorteilhaft, wenn der im wesentlichen bolzenartige Abschnitt an der Frontklappe bei der normalen Betätigung der Scharniereinrichtung zum Öffnen der Frontklappe mittels des Viergelenks von der pfannenartigen Aufnahme abhebbar ist. Damit ist immer gewährleistet, daß die Zuordnung der Frontklappe zu der pfannenartigen Aufnahme einen definierten Zustand erreicht und damit bei einer Anhebung des hinteren Bereichs der Frontklappe im Kollisionsfall eine definierte Beweglichkeit der Frontklappe und eine eindeutige Übertragung der Kräfte von dem Energiespeicher auf die Frontklappe vorliegt.

Von Vorteil ist es hierbei, daß bei einem Freigeben des Energiespeichers im Falle einer Kollision die pfannenartige Aufnahme der Verstelleinrichtung den bolzenartigen Abschnitt an der Frontklappe schlagartig in Richtung auf die angehobene Stellung der Frontklappe zu verschiebt und dabei der Schwenkhebel an seinem lösbar an der Frontklappe festgelegten Ende seine kraftschlüssige Verbindung mit der Frontklappe löst und um sein andernends gebildetes Drehgelenk relativ zur Frontklappe verschwenkt. Das Zusammenwirken des Schwenkhebels mit den beiden Lenkern des Viergelenk-Scharnieres gewährleistet hierbei die zusätzliche benötigte Beweglichkeit der Frontklappe zum Aufstellen in ihrem hinteren Bereich. Damit ist aber die Bahn der Frontklappe bei diesem Aufstellen sowie die maximale Aufstellhöhe eindeutig definiert und die Frontklappe während dieser ganzen Bewegung und auch in der aufgestellten Stellung sicher karosserieseitig festgelegt.

Im Ruhezustand ist es von Vorteil, wenn das frontklappenseitige Ende der Verstelleinrichtung mit der pfannenartigen Aufnahme der Frontklappe derart angeordnet und karosserieseitig festgelegt ist, daß der im wesentlichen bolzenartige Abschnitt an der Frontklappe in der pfannenartigen Aufnahme aufgenommen ist. In diesem Zustand bildet die pfannenartige Aufnahme einfach ein festes Gegenlager für den bolzenartigen Abschnitt der Frontklappe, damit die Frontklappe nach einem normalen Öffnen und Schließen wieder in einen definierten Zustand zurück gebracht werden kann und dort für den normalen Betrieb des Fahrzeuges sicher gehalten ist.

Hinsichtlich der Kinematik der Frontklappe beim Aufstellen in ihrem hinteren Bereich im Kollisionsfall ist es von Vorteil, wenn das Drehgelenk des Schwenkhebels an der Frontklappe und der bolzenartige Abschnitt der Frontklappe einen identischen Drehpunkt aufweisen. Hierdurch ist zum einen konstruktiv die Beweglichkeit des Schwenkhebels und gleichzeitig die Lagerung des bolzenartigen Abschnittes an der Frontklappe einfach herzustellen, zum anderen ergibt sich in weiterer Ausgestaltung, daß durch die Drehbewegung des Schwenkhebels einerseits und die Stellbewegung der Verstelleinrichtung andererseits die Frontklappe im Falle einer Kollision eine reine Schwenkbewegung um eine vorderseitig des Fahrzeuges an der Frontklappe angeordnete Verschlußeinrichtung ohne Relativverschiebungen der Frontklappe in Fahrzeuglängsrichtung relativ zu der Verschlußeinrichtung ausführt. Hierdurch ist sicher ausgeschlossen, daß die Frontklappe beim Aufstellen in ihrem hinteren Bereich sich an der vorderseitig angeordneten Verschlußeinrichtung verklemmen kann. Tritt im Bereich dieser vorderseitig angeordneten Verschlußeinrichtung eine Verschiebung der Frontklappe in Längsrichtung des Fahrzeuges auf, so kann es zu einem Verklemmen und zu einem nicht vollständigen Aufstellen der Frontklappe kommen, wodurch die Schutzwirkung der aufgestellten Frontklappe gemindert oder sogar zu Null reduziert wird. Dies kann durch die Abstimmung der Kinematik des Schwenkhebels mit der direkten Einwirkung der Verstelleinrichtung auf die Frontklappe und die Lage der jeweiligen Drehpunkte zueinander derart zu Null reduziert werden, daß im Bereich der vorderseitig angeordneten Verschlußeinrichtung keinerlei Längsverschiebung der Frontklappe auftritt.

Von Vorteil ist es, wenn der Energiespeicher eine vorgespannte mechanische Feder, insbesondere eine Schraubenfeder aufweist. Derartige mechanische Federn sind auch nach jahrelangem Nicht-Betrieb immer sicher betätigbar, mechanisch robust aufgebaut und können durch entsprechende Kräfte jederzeit wieder neu gespannt werden. Auch Verschmutzungen oder Vibrationen im normalen Fahrbetrieb beeinträchtigen im Kollisionsfall die Funktionen mechanischer Federn nicht.

Eine weitere Ausgestaltung sieht vor, daß die Verstelleinrichtung einen im wesentlichen stangenartigen Abschnitt aufweist, der im Inneren der Schraubenfeder angeordnet und an einem Ende gegen die Kraft der vorgespannten Schraubenfeder gehaltert ist und an seinem anderen Ende die pfannenartige Aufnahme für den bolzenartigen Abschnitt an der Fronthaube trägt. Durch diese Gestaltung ist es möglich, die Verstelleinrichtung sowie den Energiespeicher sehr kompakt auszugestalten, so daß eine entsprechende Erweiterung einer herkömmlichen Scharniereinrichtung nur geringfügig mehr Platz benötigt als die nicht-modifizierte Scharniereinrichtung.

Weiterhin ist es denkbar, daß der Energiespeicher im Ruhezustand durch eine Auslösevorrichtung in seinem vorgespannten Zustand gehalten ist. Eine derartige Auslösevorrichtung, die in weiterer Ausgestaltung beispielsweise im Falle einer Kollision über einen Aktor ansteuerbar sein und über Hebeleinrichtungen mechanisch verstärkt den Energiespeicher aus seinem vorgespannten Zustand freigeben kann, sichert die Verstelleinrichtung gegenüber unbeabsichtigtem Lösen und ermöglicht gleichwohl eine auch nach jahrelangem Nicht-Betrieb sichere Freigabe der Verstelleinrichtung.

Die Betätigung der Auslösevorrichtung läßt sich besonders einfach gestalten, wenn der Aktor einen elektromechanischen Schalter aufweist. Ein derartiger Aktor kann die im Fahrzeug ohnehin vorhandene elektrische Energie nutzen und ermöglicht eine relativ hohe Stellkraft sowie kurze Ansprechzeit.

Von Vorteil ist es weiterhin, wenn die Auslösevorrichtung einen hakenartigen Abschnitt aufweist, der im Ruhezustand einen zugeordneten Abschnitt des stangenartigen Abschnitts der Verstelleinrichtung hintergreift und die Verstelleinrichtung gegen die Wirkung des Energiespeichers lagesichert. Hierbei kann in weiterer Ausgestaltung der hakenartige Abschnitt der Auslösevorrichtung, die Verstelleinrichtung und der Energiespeicher nach der Auslösung der Frontklappe wieder in ihren Ausgangszustand verbringbar und erneut betätigbar sein. Durch eine derartige einfache und betriebssichere Mechanik kann die Kraft des Aktors sicher umgesetzt und der Energiespeicher einfach ausgelöst werden. Gleichzeitig ist das System reversibel gestaltbar, so daß nach einer Kollision die Scharniereinrichtung leicht wieder in den normalen Ruhezustand verbracht werden kann, was insbesondere beispielsweise bei Fehlauslösungen ohne nachfolgenden Aufprall von Wichtigkeit und gleichzeitig kostensenkend ist.

Ebenfalls ist es in anderer Ausgestaltung denkbar, daß der Energiespeicher ein fluidisches Medium aufweist. Hierzu können beispielsweise hydraulische Medien, Gasmedien oder auch pyrotechnisch erzeugte fluidische Medien genutzt werden, um in kurzer Zeit eine hohe Energiedichte in die Scharniereinrichtung einzubringen.

Montage- und justagetechnisch ist es von Vorteil, wenn der Schwenkhebel und der bolzenartige Abschnitt mittels eines gemeinsamen Montageteils an der Frontklappe festgelegt sind. Hierdurch kann die ganze Baugruppe vormontiert als Ganzes an der Frontklappe angebracht und justiert werden, wodurch die Montagekosten stark gesenkt werden können.

Hinsichtlich einer weiteren Verbesserung des Kollisionsverhaltens ist es von Vorteil, wenn die Scharniereinrichtung nach dem Anheben der Frontklappe im gegenüber dem Ruhezustand angehobenen Zustand arretierbar ist. Es ist sonst denkbar, daß vor oder bei einer Kollision der Frontklappe mit einer Person die Frontklappe gegen die Kraft des Energiespeichers und insbesondere die Federkraft sich in eine abgesenkte Stellung zurück bewegt und damit z.B. der Abstand der Frontklappe z.B. zu nicht nachgiebigen Motorenbauteilen wieder verringert wird, wodurch die Schutzwirkung der aufgestellten Frontklappe ganz oder teilweise wieder zunichte gemacht wird. Dies wird verhindert, wenn einzelne Drehgelenke der Scharniereinrichtung in der erreichten aufgestellten Position zueinander blockiert werden, etwa indem an dem Schwenkhebel und/oder dem oder den Lenkern mindestens eine Verriegelungseinrichtung angeordnet wird, die im angehobenen Zustand der Frontklappe die Relativbewegung von Schwenkhebel und/oder Lenkern gegeneinander blockiert. Damit kann sich die Frontklappe aber nicht mehr selbsttätig wieder in einer weniger aufgestellte Lage zurück bewegen und die volle Schutzwirkung aufgrund des Deformationsverhaltens und des Deformationsweges der Frontklappe bleibt sicher erhalten. Vorteilhaft ist es bei der Umsetzung dieser Verriegelung, wenn die mindestens eine Verriegelungseinrichtung einen Nocken aufweist, die im gegenüber dem Ruhezustand angehobenen Zustand der Frontklappe in eine entsprechende Gegenform eingreift und Schwenkhebel und/oder Lenker lösbar aneinander in dem angehobenen Zustand der Frontklappe arretiert. Derartige Rast- oder Verriegelungsverbindungen sind grundsätzlich bekannt und vielfältig ausgestaltbar.

Eine besonders bevorzugte Ausführungsform der erfindungsgemäßen Anordnung zeigt die Zeichnung.

Es zeigen:
- Figur 1: - eine erste Ausgestaltung der erfindungsgemäßen Scharniereinrichtung in einer schematischen Darstellung im Ruhezustand,
- Figur 2: - die erfindungsgemäße Scharniereinrichtung gemäß Figur 1 nach der Auslösung des Energiespeichers in einem leicht angehobenen Zustand,
- Figur 3: - die erfindungsgemäße Scharniereinrichtung gemäß Figur 1 in einem weiter angehobenen Zustand,
- Figur 4: - die erfindungsgemäße Scharniereinrichtung gemäß Figur 1 in ihrer am weitesten angehobenen Endlage,
- Figur 5: - die erfindungsgemäße Scharniereinrichtung gemäß Figur 1 in einer konstruktiv weiter durchgebildeten Darstellung im Ruhezustand,
- Figur 6: - die erfindungsgemäße Scharniereinrichtung gemäß Figur 1 in einer konstruktiv weiter durchgebildeten Darstellung in ihrer am weitesten angehobenen Endlage,
- Figur 7: - eine gegenüber Figur 1 geänderte Scharniereinrichtung mit einem separaten Auslösehebel zum Lösen des Schwenkhebels im Ruhezustand,
- Figur 8: - die Scharniereinrichtung gemäß Figur 7 in ihrer am weitesten angehobenen Endlage.

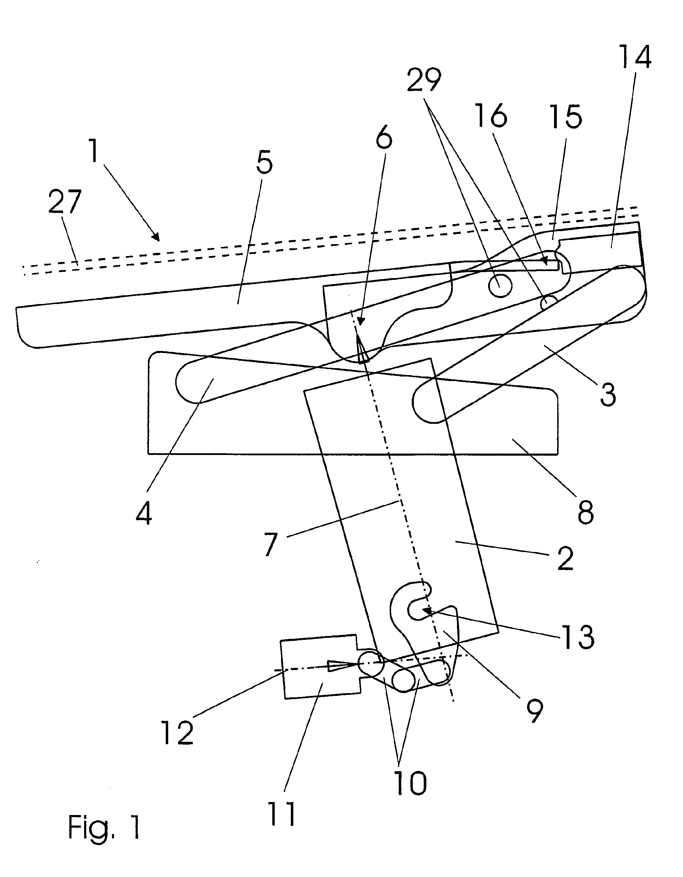

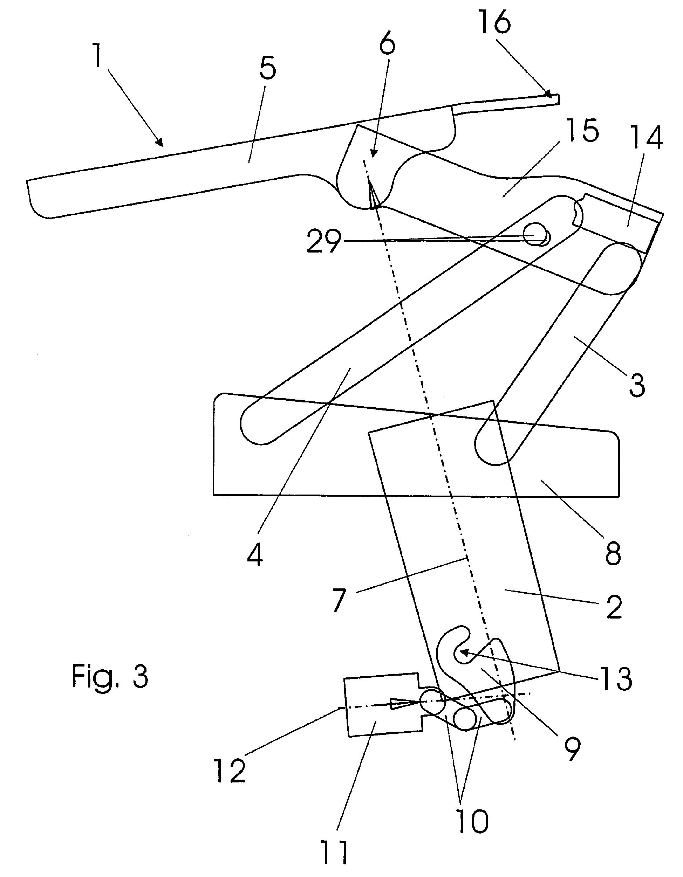

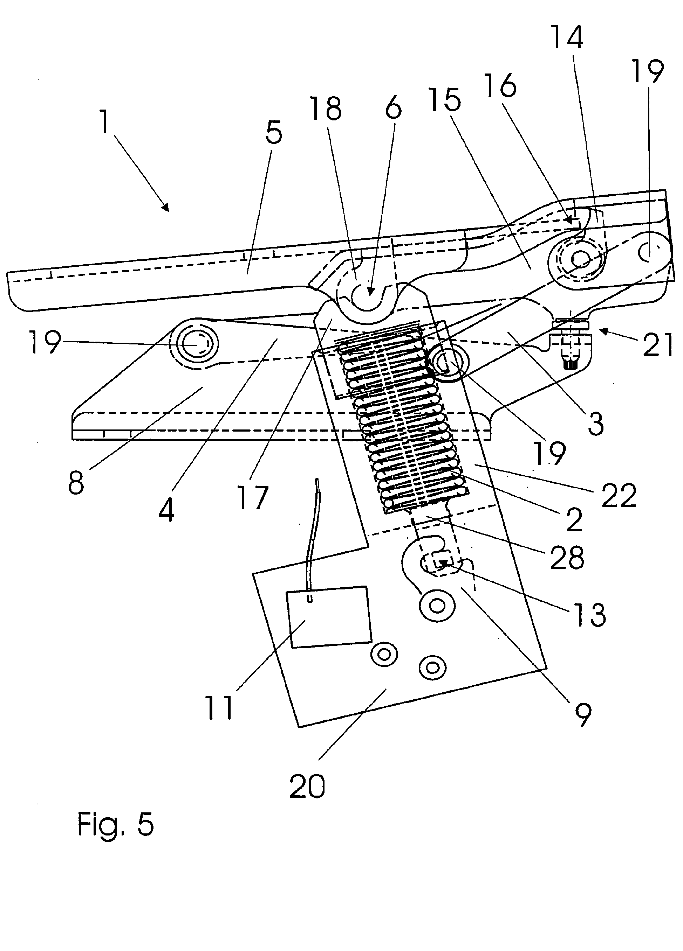

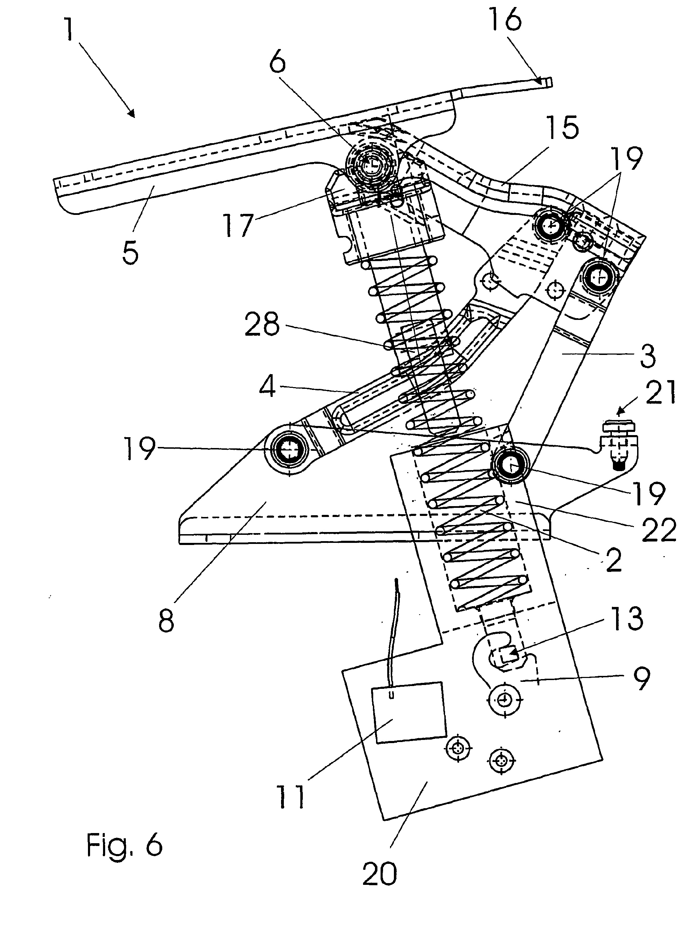

Die Figuren 1 bis 4 sowie 5 und 6 zeigen eine erste Ausgestaltung einer erfindungsgemäßen Scharniereinrichtung, wobei die Figuren 1 bis 4 eine sehr schematische Darstellung des Funktionsprinzips geben und in den Figuren 5 und 6 die konstruktive Durchbildung einer entsprechend gestalteten Scharniereinrichtung aufzeigen. Gleiche Sachnummern bezeichnen in allen Figuren gleiche Bauteile bzw. Funktionen.

Die erfindungsgemäße Scharniereinrichtung geht aus von einer an sich bekannten Viergelenk-Scharniereinrichtung, bei der an einem an einem Fahrzeug karosserieseitig festlegbaren Grundwinkel 8 über jeweils ein Gelenk 19 zwei Lenker 3, 4 drehbar festgelegt sind. Die beiden Lenker 3, 4 weisen unterschiedliche Längen auf und beschreiben damit die Bewegungsbahn einer aus einer Montageplatte 5 und einem Schwenkhebel 15 gebildeten Einheit, mit der die beiden Lenker 3, 4 mit ihren gegenüberliegenden Endbereichen ebenfalls durch Gelenke 19 drehbar verbunden sind. Hierbei sind die Montageplatte 5 und der Schwenkhebel 15 in noch näher beschriebener Weise aneinander lösbar festgelegt und können eine Relativdrehung um ein Drehgelenk 6 zueinander ausführen. Die beiden Drehgelenke 19 der Lenker 3, 4, die der nur angedeuteten Frontklappe 27 zugewandt an der Einheit aus Montageplatte 5 und Schwenkhebel 15 festgelegt sind, sind genauer gesagt an dem Schwenkhebel 15 voneinander beabstandet drehbar festgelegt. Die Montageplatte 5 dient hierbei in nicht weiter dargestellter Weise zur Festlegung an der Frontklappe 27, die beispielsweise den Motorraum eines nicht genauer dargestellten Fahrzeuges abdeckt. Zur Minderung von Schäden, die ein Fußgänger bei einem typischen Fußgänger-Unfall durch die Kollision mit der Frontklappe 27 des Fahrzeuges erleiden kann, wird hierbei durch die Scharniereinrichtung 2 in noch beschriebener Weise die Frontklappe 27 gegenüber ihrer in der Figur 1 dargestellten Ruhestellung angehoben, sofern ein entsprechender Aufprall eines Fußgängers oder dgl. durch nicht weiter dargestellte Sensoren im Fontbereich des Fahrzeuges detektiert wird.

Zur quasi schlagartigen Aufstellung der Frontklappe 27 in ihrem in Fahrtrichtung gesehen hinteren Bereich dient hierbei ein Energiespeicher 2, der vorteilhafterweise als Schraubenfeder 2 ausgebildet sein kann, die vorgespannt in einer Führungshülse 22 aufgenommen und in noch näher beschriebener Weise durch eine Auslöseeinrichtung 9, 10, 11, 13 in der vorgespannten Stellung gehalten ist. Durch den mittleren Bereich der Schraubenfeder 2 verläuft hierbei eine Verstelleinrichtung bestehend aus einem stangenartigen Abschnitt 28 und einer pfannenartigen Aufnahme 17, die am frontklappenseitigen Ende des stangenartigen Abschnittes 28 angeordnet und mit diesem verbunden ist. Am der pfannenartigen Aufnahme 17 gegenüberliegenden Ende des stangenartigen Abschnittes 28 ist ein Vorsprung 13 angeordnet, der von einem hakenartigen Auslösehebel 9 der Auslösevorrichtung 9, 10, 11, 13 umgriffen wird. Hierdurch zieht in dieser Ruhestellung der stangenartige Abschnitt 27 durch das Ende mit dem pfannenartigen Abschnitt 17 die Schraubenfeder 2 in die Führungshülse 22 und spannt sie dabei vor. Bei einem Freigeben des Auslösehebels 9 in noch näher beschriebener Weise wird der Energiegehalt der vorgespannten Schraubenfeder 2 schlagartig frei und verschiebt die pfannenartige Aufnahme 17 schlagartig in Verstellrichtung 7 des Energiespeichers 2. Hierdurch wird ein bolzenartiger Abschnitt 18 an der Montageplatte 5 und damit die an der Montageplatte 5 festgelegte Frontklappe 27 ebenfalls schlagartig in Verstellrichtung 7 des Energiespeichers 2 bewegt und die Frontklappe 27 dabei in Ihrem hinteren Bereich aufgestellt.

Die Führung der Frontklappe 27 bei dieser Bewegung erfolgt dabei einerseits über die Lenker 3, 4 des Viergelenkes und zum anderen über das Zusammenwirken von Montageplatte 5 und Schwenkhebel 15. Zu Beginn der Bewegung der Frontklappe 1 nach oben (dargestellt in Figur 1) bilden die Montageplatte 5 und der Schwenkhebel 15 eine Einheit, da sie über eine Rastverbindung aus einer Rastkante 14 und einer Gegenkante 16 kraftschlüssig miteinander verbunden sind. Die Rastkante 14, die in den Figuren 1 bis 4 nur schematisch angedeutet ist, wird hierbei etwa durch ein auf dem Schwenkhebel 15 fest angeordnetes und mit einer Nase versehenes Zusatzteil gebildet. Da der Schwenkhebel 15 und die Montageplatte 5 durch das Drehgelenk 6 drehbar zueinander gelagert sind, ist eine eindeutige Zuordnung zwischen Rastkante 14 und Gegenkante 16 in der Ruhestellung gemäß Figur 1 gewährleistet. Wird nun der Energiespeicher 2 in Form der Schraubenfeder 2 durch Betätigen des Auslösehebels 9 und Freigeben des Vorsprunges 13 in Richtung 7 bewegt, so wird die Montageplatte 5 auf einer anderen Bahn bewegt werden als der Schwenkhebel 15, der durch die Gelenke 19 der Lenker 3, 4 nur eine eingeschränkte Beweglichkeit aufweist. Hierdurch wird die Rastverbindung zwischen der Rastkante 14 und der Gegenkante 16 zwangsläufig aufgehoben und der Schwenkhebel 15 führt eine Relativdrehung zu der Montageplatte 5 und der daran angeordneten Frontklappe 27 aus. Die Frontklappe ist nicht dargestellter Weise, aber grundsätzlich bekannt im vorderen Bereich des nicht dargestellten Fahrzeuges durch eine Verschlußeinrichtung gehalten und kann um diese Verschlußeinrichtung lediglich eine Drehbewegung ausführen. Daher ist die mögliche Bahn der Frontklappe 27 in ihrem hinteren Bereich ebenfalls vorgegeben, so daß sich die Montageplatte 5 in entsprechender Weise um die vorderseitige Verschlußeinrichtung herum drehen wird.

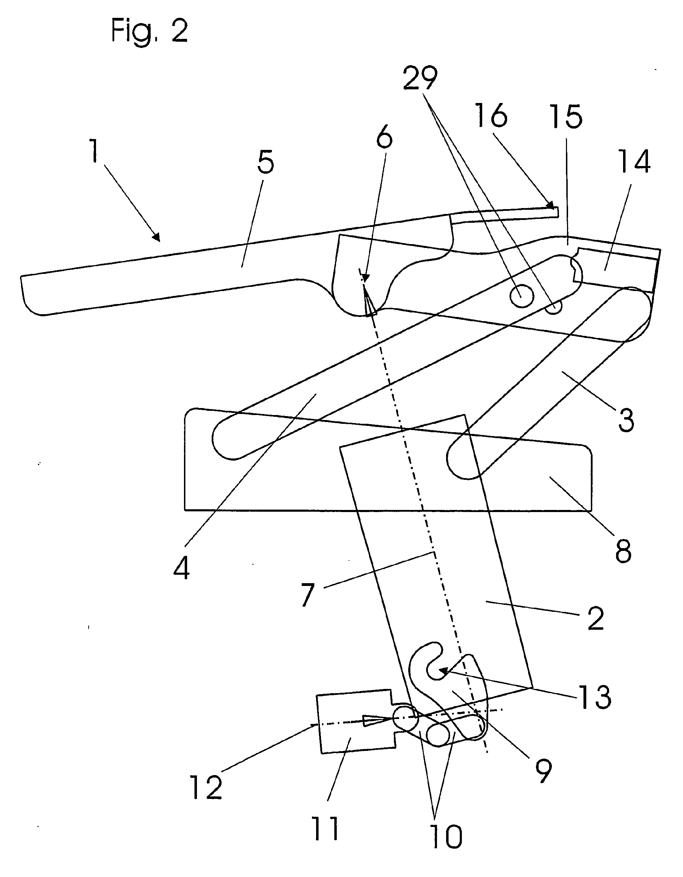

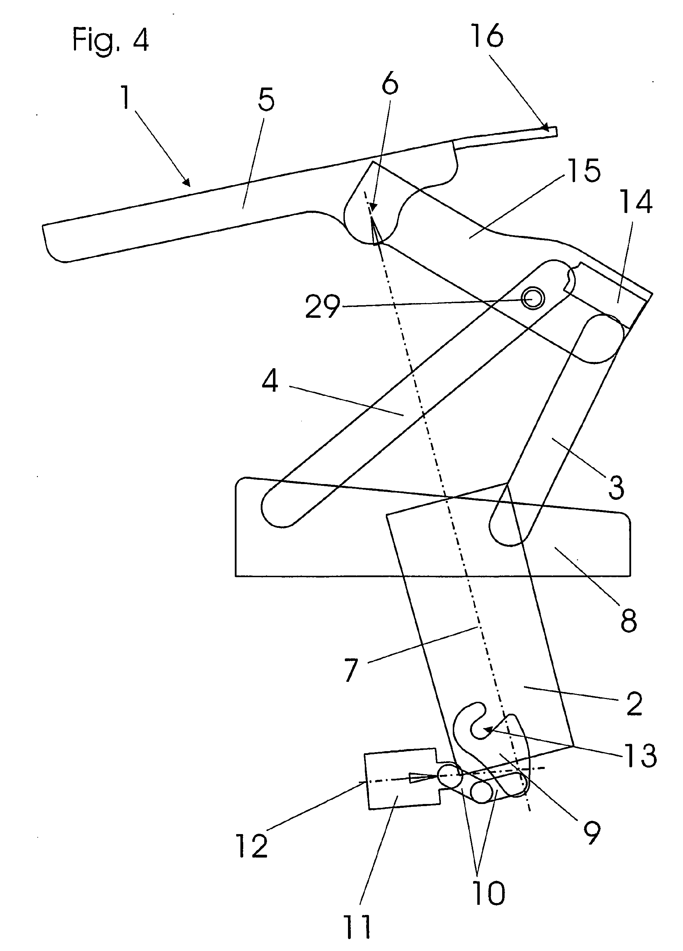

Wie in den Figuren 2, 3 und 4 besser zu erkennen ist, verdreht sich mit zunehmender Bewegung der Schraubenfeder 2 in Verstellrichtung 7 der Schwenkhebel 15 immer weiter relativ zu der Montageplatte 5, bis er wie in Figur 4 dargestellt seine kinematisch mögliche Endlage erreicht hat. In dieser Endlage ist die Frontklappe 27 maximal möglich aufgestellt und bietet daher im Falle einer Kollision eines Fußgängers mit der Frontklappe 27 eine entsprechende Nachgiebigkeit durch Verformung in den freien Bereich unterhalb der Frontklappe 27. Hierbei kann die Frontklappe auch ohne Einwirkung der Federkraft der Schraubenfeder 2 in dieser angehobenen Stellung dadurch arretiert werden, indem eine nur schematisch als zwei in der angehobenen Stellung zur Deckung gebrachte Kreise angedeutete lösbare Verriegelungseinrichtung 29, beispielsweise eine Klinke oder Nocke oder Raste, die in eine entsprechende Gegenform eingreift, die Relativbewegung zwischen Lenker 4 und Schwenkhebel 15 blockiert. Hierdurch wird die Scharniereinrichtung 1 selbst in ihrer Bewegung blockiert und kann beim Einwirken z.B. von Aufprallkräften aus einer Kollision mit einem Fußgänger nicht mehr unzulässig verstellt werden. Die Verriegelungseinrichtung 29 selbst kann dabei lösbar ausgestaltet sein, so daß z.B. nach einer Fehlauslösung der Scharniereinrichtung 1 die Frontklappe wieder in den Ruhezustand zurück gestellt werden kann. Es ist selbstverständlich ebenfalls denkbar, die Verriegelungseinrichtung 29 alternativ oder zusätzlich an anderen Stellen der Scharniereinrichtung 1 anzuordnen und damit auch die Relativbewegung dieser Elemente der Scharniereinrichtung 1 im angehobenen Zustand der Frontklappe 27 zu blockieren.

Die Auslösung der Schraubenfeder erfolgt hierbei durch einen nicht dargestellten Sensor im Frontbereich des Fahrzeuges gesteuert, indem ein Aktor 11 bestromt wird und eine Verschiebung eines entsprechenden Stellgliedes des Aktors 11 in Verstellrichtung 12 bewirkt. Diese Verstellbewegung wird über zwischengestaltete Übertragungshebel 10 auf den Auslösehebel 9 übertragen, der daraufhin in nicht weiter dargestellter Weise eine Schwenkbewegung zur Freigabe des Vorsprunges 13 des stangenartigen Abschnittes 28 ausführt. Mit einer derartigen Auslöseeinrichtung 9, 10, 11, 13 kann auch nach langer Nicht-Betätigung sicher gewährleistet werden, daß der Auslösehebel 9 den Vorsprung 13 frei gibt. Hierdurch wird dann der stangenartigen Abschnitt 28 freigegeben und wie schon beschrieben durch die Schraubenfeder 2 in Verstellrichtung 7 beschleunigt. Der Aktor 11, die Hebel 10 sowie der Auslösehebel 9 und die zugehörigen Drehgelenke sind auf einer Montageplatte 20 vormontiert und können daher einfach in das Fahrzeug eingebaut werden.

Wie insbesondere aus den Figuren 5 und 6 zu entnehmen ist, ist die Anlenkung des stangenartigen Abschnittes 28 in seinem der Frontklappe 27 zugewandten Endbereich über eine pfannenartige Aufnahme 17 realisiert, die einen bolzenartigen Abschnitt 18 im Bereich des Drehgelenks 6 an der Montageplatte 5 und damit indirekt an der Frontklappe 27 aufweist. Diese Art der Übertragung der Verstellbewegung der Verstelleinrichtung 17, 28 hat ihren Grund darin, daß die Scharniereinrichtung 1 im normalen Betrieb ein Abheben der Frontklappe 27 erlauben muß, die zum Öffnen, beispielsweise eines Motorraums des Fahrzeuges genutzt werden kann. Hierzu wird in grundsätzlich bekannter Weise die Bewegung der Frontklappe 27 allein durch die Lenker 3, 4 des Viergelenkes gesteuert, wozu aber die Frontklappe 27 sich relativ zu der Verstelleinrichtung 17, 28 bewegen können muß. Hierzu kann der bolzenartigen Abschnitt 18 von der pfannenartigen Aufnahme 17 der Verstelleinrichtung 17, 28 abgehoben werden und wird nach dem Schließen der Frontklappe 27 durch die kinematische Führung der Lenker 3, 4 des Viergelenkes wieder in die pfannenartige Aufnahme 17 eingelegt. Damit wird aber die normale Öffnungsbewegung der Frontklappe 27 durch die Erweiterung der Scharniereinrichtung 1 um die Aufstellfunktion in keiner Weise beeinträchtigt, gleichzeitig aber eine genaue Zuordnung von Frontklappe 27 zur Verstelleinrichtung 17, 28 erreicht.

Die Ruhelage der Scharniereinrichtung 1 wird hierbei durch das Aufsetzen eines Abschnittes des Schwenkhebels 15 auf einem entsprechenden Anschlag 21 begrenzt und vorgegeben, wobei der Anschlag 21 einstellbar sein kann, um ein Einjustieren der Lage der Frontklappe 27 nach dem Einbau in das Fahrzeug vornehmen zu können. Die am weitesten ausgefahrene Stellung der Scharniereinrichtung 1 gemäß Figur 6 ergibt sich hierbei durch die kinematische Begrenzung des Hubes des Schwenkhebels 15 und der Montageplatte 5.

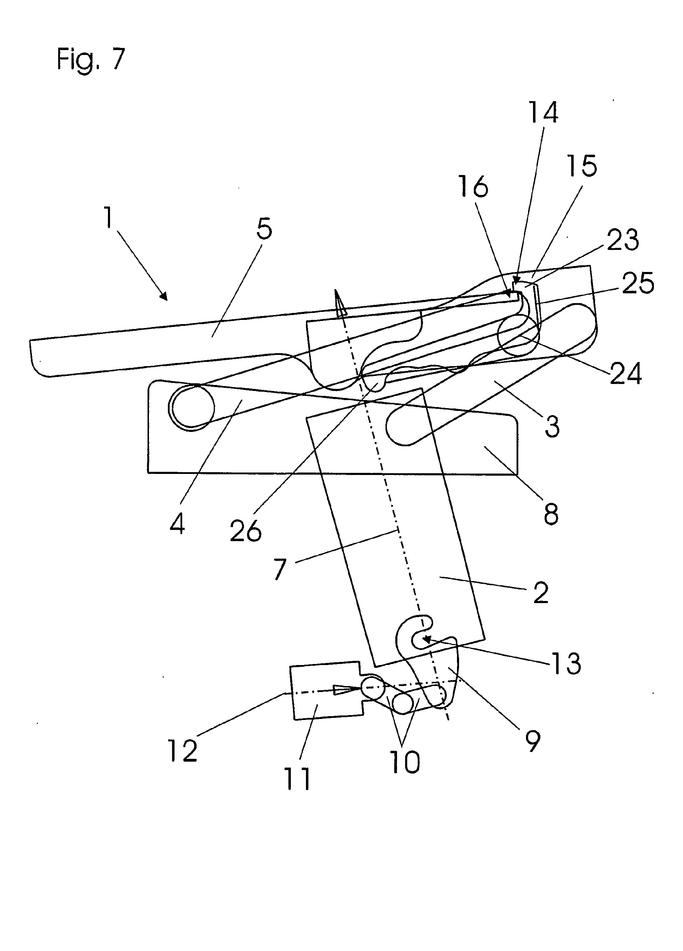

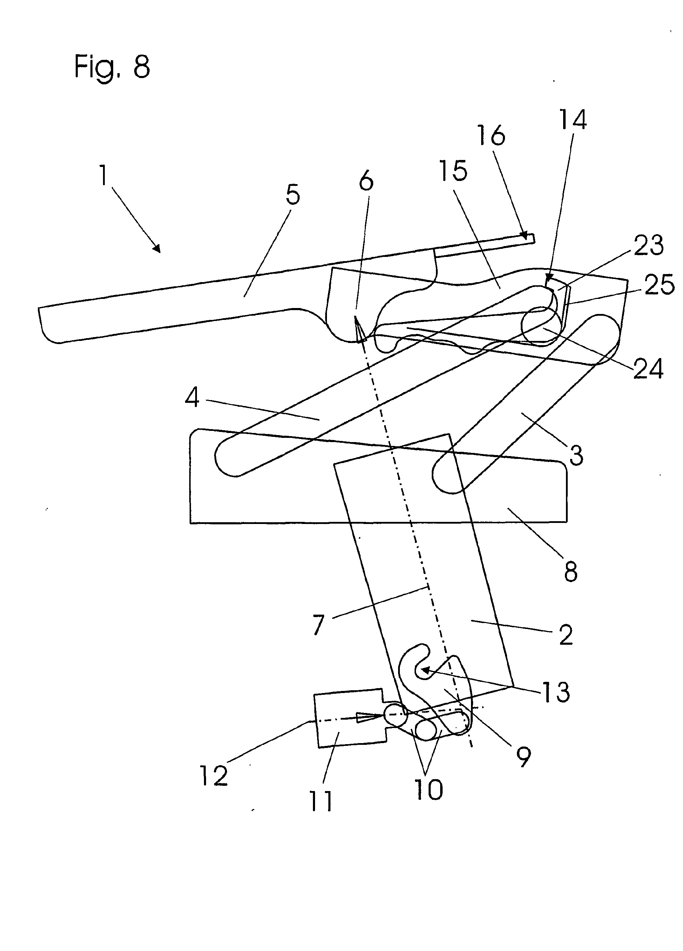

In den Figuren 7 und 8 ist eine leicht modifizierte Scharniereinrichtung 1 dargestellt, bei der die Rastverbindung 16, 14 zwischen Schwenkhebel 15 und Montageplatte 5 durch ein separates Bauteil, hier einen Rasthebel 23 hergestellt wird. Dieser Rasthebel 23 ist an dem Schwenkhebel 15 durch ein Gelenk 24 drehbar und über eine Feder 25 federnd gelagert und kann dabei die Gegenkante 16 der Montageplatte 5 in einer seiner Endlagen übergreifen und somit die Rastverbindung herstellen. Am gegenüberliegenden Ende des Rasthebels 23 ist eine Nase 26 vorgesehen, die in den Bereich des Energiespeichers 2 hinein ragt und bei der Auslösung des Energiespeichers 2 und der Beschleunigung der nicht weiter dargestellten pfannenartigen Aufnahme 17 von der pfannenartigen Aufnahme 17 zwangsläufig betätigt wird. Hierdurch wird der Rasthebel 23 so verdreht, daß er mit seiner Rastkante 14 die Gegenkante 16 an der Montageplatte 5 frei gibt und damit die drehfeste Trennung von Schwenkhebel 15 und Montageplatte 5 bewirkt. Die Feder 25 dient hierbei dazu, nachdem Freigeben der Gegenkante 16 den Rasthebel 23 wieder in seine Ausgangslage zurück zu bringen, indem ein erneutes Verrasten mit der Gegenkante 16 möglich ist, wenn der Energiespeicher 2 wieder vorgespannt und die Scharniereinrichtung 1 in ihren Ausgangszustand zurück versetzt wird.

### Sachnummernliste

- 1 -: Scharniereinrichtung
- 2 -: Energiespeicher/Schraubenfeder
- 3 -: Lenker Viergelenk
- 4 -: Lenker Viergelenk
- 5 -: Montageplatte Frontklappe
- 6 -: Drehgelenk
- 7 -: Verstellrichtung Energiespeicher
- 8 -: Grundwinkel
- 9 -: Auslösehebel
- 10 -: Übertragungshebel
- 11 -: Aktor
- 12 -: Verstellrichtung Aktor
- 13 -: Vorsprung
- 14 -: Rastkante
- 15 -: Schwenkhebel
- 16 -: Gegenkante
- 17 -: pfannenartige Aufnahme
- 18 -: bolzenartiger Abschnitt
- 19 -: Drehgelenk Viergelenk
- 20 -: Montageplatte Auslöseeinrichtung
- 21 -: Anschlag
- 22 -: Führungshülse Energiespeicher/Schraubenfeder
- 23 -: Rasthebel
- 24 -: Drehpunkt Rasthebel
- 25 -: Feder
- 26 -: Nase Rasthebel
- 27 -: Frontklappe
- 28 -: stangenartiger Abschnitt
- 29 -: Verriegelungseinrichtung

## Patentansprüche

1. Anordnung einer Frontklappe (27) an einem Fahrzeug, mit zumindest einer in Fahrtrichtung betrachtet hinten liegenden Scharniereinrichtung (1) in Form eines Viergelenkes (3, 4) mit einem langen und einem kurzen Lenker, wobei mittels der Scharniereinrichtung (1) die Frontklappe (27) beim normalen Öffnen und Schließen verschwenkbar und bei einer Kollision des Fahrzeugs im hinteren Bereich anhebbar ist,
**dadurch gekennzeichnet, daß**
die Scharniereinrichtung (1) einen Energiespeicher (2) aufweist, der bei einer Kollision des Fahrzeugs eine Verstelleinrichtung (17, 28) betätigt, die wiederum direkt auf die Frontklappe (27) einwirkt und mit dieser in lösbarer Verbindung steht, wobei die frontklappenseitigen Gelenke (19) des Viergelenks (3, 4) gelenkig an einem Schwenkhebel (15) festgelegt sind, der im Ruhezustand mit einem Ende lösbar an der Frontklappe (27) festgelegt und mit seinem anderen Ende um ein im Bereich (18) der Anlenkung der Verstelleinrichtung (17, 28) an der Frontklappe (27) angeordnetes Drehgelenk (6) relativ zur Frontklappe (27) verschwenkbar ist, und die Verstelleinrichtung (17, 28) bei einer Kollision des Fahrzeugs die Frontklappe (27), geführt durch die Lenker (3, 4) des Viergelenks und den einseitig von der Frontklappe (27) sich lösenden Schwenkhebel (15), gegenüber dem Ruhezustand anhebt.

2. Anordnung gemäß Anspruch 1, **dadurch gekennzeichnet, daß** der Schwenkhebel (15) mit seinem einen Ende derart lösbar an der Frontklappe (27) festgelegt ist, daß er bei Überschreiten einer vorgebbaren Kraft in Richtung auf die Lageänderung der Verstelleinrichtung (17, 28) bei der Auslösung des Energiespeichers (2) seine lösbare Verbindung mit der Frontklappe (27) löst und um sein andernends an der Frontklappe (27) angeordnetes Drehgelenk (6) verschwenkbar ist.

3. Anordnung gemäß Anspruch 2, **dadurch gekennzeichnet, daß** der Schwenkhebel (15) mit einem Ende über eine kraftschlüssige Verbindung (16, 14) an der Frontklappe (27) festgelegt ist.

4. Anordnung gemäß Anspruch 3, **dadurch gekennzeichnet, daß** die kraftschlüssige Verbindung (16, 14) durch eine mechanische Rastverbindung gebildet ist, bei der eine Funktionskante (16) an dem Schwenkhebel (15) eine frontklappenseitig angeordnete Gegenform (14) hintergreift und mit dieser im normalen Ruhezustand der Frontklappe (27) verrastet ist.

5. Anordnung gemäß Anspruch 4, **dadurch gekennzeichnet, daß** die Gegenform (14) an einem separaten Bauteil (23) gebildet ist, das an der Frontklappe (27) beweglich und/oder federnd festgelegt ist.

6. Anordnung gemäß Anspruch 5, **dadurch gekennzeichnet, daß** das separate Bauteil (23) durch die von dem Energiespeicher (2) ausgelöste Verstelleinrichtung (17, 28) betätigbar ist, wenn sich bei einer Kollision die Verstelleinrichtung (17, 28) aus ihrer Ruhestellung bewegt und dabei die kraftschlüssige Verbindung (16, 14) des Schwenkhebels (15) mit der Frontklappe (27) löst.

7. Anordnung gemäß einem der vorstehenden Ansprüche, **dadurch gekennzeichnet, daß** das frontklappenseitige Ende der Verstelleinrichtung (17, 28) über eine pfannenartige Aufnahme (17) mit einem im wesentlichen bolzenartigen Abschnitt (18) an der Frontklappe (27) in kraftschlüssiger Verbindung steht.

8. Anordnung gemäß Anspruch 7, **dadurch gekennzeichnet, daß** der im wesentlichen bolzenartige Abschnitt (18) an der Frontklappe (27) bei der normalen Betätigung der Scharniereinrichtung (1) zum Öffnen der Frontklappe (27) mittels des Viergelenks (3, 4) von der pfannenartigen Aufnahme (17) abhebbar ist.

9. Anordnung gemäß einem der vorstehenden Ansprüche, **dadurch gekennzeichnet, daß** bei einem Freigeben des Energiespeichers (2) im Falle einer Kollision die pfannenartige Aufnahme (17) der Verstelleinrichtung (17, 28) den bolzenartigen Abschnitt (18) an der Frontklappe (27) schlagartig in Richtung auf die angehobenen Stellung der Frontklappe (27) zu verschiebt und dabei der Schwenkhebel (15) an seinem lösbar an der Frontklappe (27) festgelegten Ende seine kraftschlüssige Verbindung (16, 14) mit der Frontklappe (27) löst und um sein andernends gebildetes Drehgelenk (6) relativ zur Frontklappe (27) verschwenkt.

10. Anordnung gemäß einem der vorstehenden Ansprüche, **dadurch gekennzeichnet, daß** das frontklappenseitige Ende der Verstelleinrichtung (17, 28) mit der pfannenartigen Aufnahme (17) im normalen Ruhezustand der Frontklappe (27) derart angeordnet und karosserieseitig festgelegt ist, daß der im wesentlichen bolzenartige Abschnitt (18) an der Frontklappe (27) in der pfannenartigen Aufnahme (17) aufgenommen ist.

11. Anordnung gemäß einem der vorstehenden Ansprüche, **dadurch gekennzeichnet, daß** das Drehgelenk (6) des Schwenkhebels (15) an der Frontklappe (27) und der bolzenartige Abschnitt (18) der Frontklappe (27) einen identischen Drehpunkt aufweisen.

12. Anordnung gemäß einem der vorstehenden Ansprüche, **dadurch gekennzeichnet, daß** durch die Drehbewegung des Schwenkhebels (15) einerseits und die Stellbewegung (7) der Verstelleinrichtung (17, 28) andererseits die Frontklappe (27) im Falle einer Kollision eine reine Schwenkbewegung um eine vorderseitig des Fahrzeuges an der Frontklappe (27) angeordnete Verschlußeinrichtung ohne Relativverschiebungen der Frontklappe (27) in Fahrzeuglängsrichtung relativ zu der Verschlußeinrichtung ausführt.

13. Anordnung gemäß einem der vorstehenden Ansprüche, **dadurch gekennzeichnet, daß** der Energiespeicher (2) eine vorgespannte mechanische Feder, insbesondere eine Schraubenfeder (2) aufweist.

14. Anordnung gemäß einem der vorstehenden Ansprüche, **dadurch gekennzeichnet, daß** die Verstelleinrichtung (17, 28) einen im wesentlichen stangenartigen Abschnitt (28) aufweist, der im Inneren der Schraubenfeder (2) angeordnet und an einem Ende gegen die Kraft der vorgespannten Schraubenfeder (2) gehaltert ist und an seinem anderen Ende die pfannenartige Aufnahme (17) für den bolzenartigen Abschnitt (18) an der Fronthaube (27) trägt.

15. Anordnung gemäß einem der vorstehenden Ansprüche, **dadurch gekennzeichnet, daß** der Energiespeicher (2) im Ruhezustand durch eine Auslösevorrichtung (9, 10, 11) in seinem vorgespannten Zustand gehalten ist.

16. Anordnung gemäß einem der vorstehenden Ansprüche, **dadurch gekennzeichnet, daß** die Auslösevorrichtung (9, 10, 11) im Falle einer Kollision über einen Aktor (10) ansteuerbar und über Hebeleinrichtungen (10) mechanisch verstärkt den Energiespeicher (2) aus seinem vorgespannten Zustand freigibt.

17. Anordnung gemäß Anspruch 16, **dadurch gekennzeichnet, daß** der Aktor (11) einen elektromechanischen Schalter aufweist.

18. Anordnung gemäß einem der vorstehenden Ansprüche, **dadurch gekennzeichnet, daß** die Auslösevorrichtung (9, 10, 11) einen hakenartigen (9) Abschnitt aufweist, der im Ruhezustand einen zugeordneten Abschnitt (13) des stangenartigen Abschnitts (28) der Verstelleinrichtung (17, 28) hintergreift und die Verstelleinrichtung (17, 28) gegen die Wirkung des Energiespeichers (2) lagesichert.

19. Anordnung gemäß Anspruch 18, **dadurch gekennzeichnet, daß** der hakenartige Abschnitt (9) der Auslösevorrichtung(9, 10, 11), die Verstelleinrichtung (17, 28) und der Energiespeicher (2) nach der Auslösung der Frontklappe (27) wieder in ihren Ausgangszustand verbringbar und erneut betätigbar sind.

20. Anordnung gemäß einem der vorstehenden Ansprüche, **dadurch gekennzeichnet, daß** der Energiespeicher (2) ein fluidisches Medium aufweist.

21. Anordnung gemäß einem der vorstehenden Ansprüche, **dadurch gekennzeichnet, daß** der Schwenkhebel (15) und der bolzenartige Abschnitt (18) mittels eines gemeinsamen Montageteils (5) an der Frontklappe (27) festgelegt sind.

22. Anordnung gemäß einem der vorstehenden Ansprüche, **dadurch gekennzeichnet, daß** die Scharniereinrichtung (1) nach dem Anheben der Frontklappe (27) im gegenüber dem Ruhezustand angehobenen Zustand arretierbar ist.

23. Anordnung gemäß Anspruch 22, **dadurch gekennzeichnet, daß** an dem Schwenkhebel (15) und/oder dem oder den Lenkern (3, 4) mindestens eine Verriegelungseinrichtung angeordnet ist, die im angehobenen Zustand der Frontklappe (27) die Relativbewegung von Schwenkhebel (15) und/oder Lenkern (3, 4) gegeneinander blockiert.

24. Anordnung gemäß Anspruch 23, **dadurch gekennzeichnet, daß** die mindestens eine Verriegelungseinrichtung einen Nocken aufweist, die im gegenüber dem Ruhezustand angehobenen Zustand der Frontklappe (27) in eine entsprechende Gegenform eingreift und Schwenkhebel (15) und/oder Lenker (3, 4) lösbar aneinander in dem angehobenen Zustand der Frontklappe (27) arretiert.

## Claims

1. Arrangement of a front gate (27) on a vehicle, having at least one hinge device (1) that lies in the rear, viewed in the direction of travel, in the form of a four-bar mechanism (3, 4) having a long and a short arm, whereby the front gate (27) can be pivoted during normal opening and closing by means of the hinge device (1), and can be raised in the rear region in the case of a collision of the vehicle,
**characterized in that**
the hinge device (1) has an energy accumulator (2) that activates a displacement device (17, 28) in the case of a collision of the vehicle, which device in turn acts directly on the front gate (27) and stands in a releasable connection with it, whereby the front-gate-side articulations (19) of the four-bar mechanism (3, 4) are fixed in place on a pivoting lever (15), in articulated manner, which lever is releasably fixed in place on the front gate (27) in the state of rest, with one end, and can be pivoted relative to the front gate (27) with its other end, about a rotary articulation (6) disposed on the front gate (27) in the region (18) of the articulation of the displacement device (17, 28), and the displacement device (17, 28) raises the front gate (27), guided by the arms (3, 4) of the four-bar mechanism, and the pivoting lever (15) that is released from the front gate (27) on one side, as compared with the state of rest, in the case of a collision of the vehicle.

2. Arrangement according to claim 1, **characterized in that** the pivoting lever (15) is releasably fixed in place on the front gate (27) with its one end, in such a manner that when a force that can be predetermined, in the direction towards a change in position of the displacement device (17, 28), is exceeded, it releases its releasable connection with the front gate (27) when the energy accumulator (2) is triggered, and can be pivoted about its rotary articulation (6) disposed on the front gate (27) on the other end.

3. Arrangement according to claim 2, **characterized in that** the pivoting lever (15) can be fixed in place on the front gate (27) with one end, by way of a non-positive-lock connection (16, 14).

4. Arrangement according to claim 3, **characterized in that** the non-positive-lock connection (16, 14) is formed by means of a mechanical snap-in connection, in which a functional edge (16) on the pivoting lever (15) engages behind a counter-shape (14) disposed on the front gate side, and is locked in place with it in the normal state of rest of the front gate (27).

5. Arrangement according to claim 4, **characterized in that** the counter-shape (14) is formed on a separate component (23), which is fixed in place on the front gate (27) in movable and/or resilient manner.

6. Arrangement according to claim 5, **characterized in that** the separate component (23) can be activated by the displacement device (17, 28) triggered by the energy accumulator (2), if the displacement device (17, 28) moves out of its rest position in the case of a collision and, in this connection, releases the non-positive-lock connection (16, 14) of the pivoting lever (15) with the front gate (27).

7. Arrangement according to one of the preceding claims, **characterized in that** the front-gate-side end of the displacement device (17, 28) stands in a non-positive-lock connection with an essentially bolt-like segment (18) on the front gate (27), by way of a pan-like accommodation (17).

8. Arrangement according to claim 7, **characterized in that** the essentially bolt-like segment (18) on the front gate (27) can be raised from the pan-like accommodation (17) during normal activation of the hinge device (1) for opening the front gate (27) by means of the four-bar mechanism (3, 4).

9. Arrangement according to one of the preceding claims, **characterized in that** when the energy accumulator (2) is released in the case of a collision, the pan-like accommodation (17) of the displacement device (17, 28) suddenly displaces the bolt-like segment (18) on the front gate (27) in the direction towards the raised position of the front gate (27) and, in this connection, the pivoting lever (15) releases its non-positive-lock connection (16, 14) with the front gate (27), at its end that is releasably fixed in place on the front gate (27), and pivots about its rotary articulation (6), relative to the front gate (27), formed at its other end.

10. Arrangement according to one of the preceding claims, **characterized in that** the front-gate-side end of the displacement device (17, 28) is disposed and fixed in place on the vehicle body side with the pan-like accommodation (17), in the normal state of rest of the front gate (27), in such a manner that the essentially bolt-like segment (18) on the front gate (27) is accommodated in the pan-like accommodation (17).

11. Arrangement according to one of the preceding claims, **characterized in that** the rotary articulation (6) of the pivoting lever (15) on the front gate (27) and the bolt-like segment (18) of the front gate (27) have an identical point of rotation.

12. Arrangement according to one of the preceding claims, **characterized in that** by means of the rotary movement of the pivoting lever (15), on the one hand, and the setting movement (7) of the displacement device (17, 28), on the other hand, the front gate (27) performs a pure pivoting movement about a closure device disposed on the front gate (27), on the front end of the vehicle, without a relative displacement of the front gate (27) in the longitudinal direction of the vehicle, relative to the closure device.

13. Arrangement according to one of the preceding claims, **characterized in that** the energy accumulator (2) has a biased mechanical spring, particularly a helical spring (2).

14. Arrangement according to one of the preceding claims, **characterized in that** the displacement device (17, 28) has an essentially rod-like segment (28) that is disposed in the interior of the helical spring (2), and is held in place on one end, against the force of the biased helical spring (2), and carries the pan-like accommodation (17) for the bolt-like segment (18) on the front hood (27) at its other end.

15. Arrangement according to one of the preceding claims, **characterized in that** the energy accumulator (2) is held in its biased state, in its state of rest, by means of a triggering device (9, 10, 11).

16. Arrangement according to one of the preceding claims, **characterized in that** the triggering device (9, 10, 11) can be controlled by way of an actor (10) in the case of a collision, and releases the energy accumulator (2) from its biased state with mechanical reinforcement by way of lever devices (10).

17. (Currently Amended): Arrangement according to claim 16, **characterized in that** the actor (11) has an electromechanical switch.

18. Arrangement according to one of the preceding claims, **characterized in that** the triggering device (9, 10, 11) has a hook-like (9) segment that engages behind a related segment (13) of the rod-like segment (28) of the displacement device (17, 28), and secures the displacement device (17, 28) in its position, counter to the effect of the energy accumulator (2).

19. Arrangement according to claim 18, **characterized in that** the hook-like segment (9) of the triggering device (9, 10, 11), the displacement device (17, 28), and the energy accumulator (2) can be brought back into their starting state after the front gate (27) has been triggered, and can be activated again.

20. Arrangement according to one of the preceding claims, **characterized in that** the energy accumulator (2) has a fluid medium.

21. Arrangement according to one of the preceding claims, **characterized in that** the pivoting lever (15) and the bolt-like segment (18) are fixed in place on the front gate (27) by means of a common assembly part (5).

22. Arrangement according to one of the preceding claims, **characterized in that** the hinge device (1) can be locked in place in a raised state, as compared with the rest state, after the front gate (27) has been raised.

23. Arrangement according to claim 22, **characterized in that** at least one locking device is disposed on the pivoting lever (15) and/or on the arm or arms (3, 4), which device prevents the relative movement of pivoting lever (15) and/or arms (3, 4) in the raised state of the front gate (27).

24. Arrangement according to claim 23, **characterized in that** the at least one locking device has a cam that engages into a corresponding counter-shape in the raised state of the front gate (27), as compared with the state of rest, and locks pivoting lever (15) and/or arms (3, 4) releasably against one another, in the raised state of the front gate (27).

## Revendications

1. Disposition d'un capot frontal (27) sur un véhicule, avec au moins un dispositif à charnière (1), situé à l'arrière vu dans le sens de la marche du véhicule, en forme d'une quadruple articulation (3, 4) avec un bras court et un bras long, de telle façon que le capot frontal (27) peut pivoter à l'aide du dispositif à charnière (1) en cas d'ouverture et de fermeture normales et être soulevée dans la partie arrière en cas de collision,
**caractérisé par le fait que**
le dispositif à charnière (1) dispose d'un réservoir d'énergie (2) qui commande en cas de collision du véhicule un dispositif de réglage (17, 28) agissant directement sur le capot frontal (27) et assemblé de manière amovible avec cette dernière, de telle façon que les articulations côté capot frontal (19) de la quadruple articulation (3, 4) sont fixées de façon flexible sur un levier pivotant (15) dont une extrémité étant fixée amoviblement sur le capot frontal (27) au repos et l'autre extrémité pouvant pivoter autour d'une articulation tournante disposée dans la partie de l'articulation du dispositif de réglage (17, 28) sur le capot frontal (27), et en cas de collision du véhicule, le dispositif de réglage (17, 28), par rapport à l'état au repos, soulève le capot frontal (27), guidé par les bras (3, 4) de la quadruple articulation et le levier pivotant (15) se détachant d'un côté du capot frontal (27).

2. Disposition selon revendication 1, **caractérisée par le fait que** le levier pivotant (15) est fixé amoviblement avec une extrémité sur le capot frontal (27) de manière à ce qu'il défait son assemblage amovible avec le capot frontal (27) lorsqu'il dépasse une force à prédéfinir agissant sur le déplacement du dispositif de réglage (17, 28) au moment du déclenchement du réservoir d'énergie (2) et peut pivoter autour de son articulation tournante (6) disposée sur le capot frontal (27).

3. Disposition selon revendication 2, **caractérisée par le fait que** le levier pivotant (15) est fixé par adhérence (16, 14) avec une extrémité sur le capot frontal (27).

4. Disposition selon revendication 3, **caractérisée par le fait que** l'assemblage par adhérence (16,14) se fait par un encliquetage mécanique fonctionnant de telle manière qu'une arête fonctionnelle (16) sur le levier pivotant (15) saisie à l'arrière une contre-forme (14) disposée côté capot frontal et avec laquelle elle est enclenchée lorsque le capot frontal (27) se trouve en état de repos normal.

5. Disposition selon revendication 4, **caractérisée par le fait que** la contre-forme (14) se situe sur un élément de construction séparé (23) qui est fixé sur le capot frontal (27) de façon mobile et / ou élastique.

6. Disposition selon revendication 5, **caractérisée par le fait que** l'élément de construction séparé (23) puisse être commandé par le dispositif de réglage (17, 28) déclenché par le réservoir d'énergie (2) quand en cas de collision le dispositif de réglage (17, 28) quitte sa position de repos et défait l'assemblage par adhérence (16, 14) du levier pivotant (15) avec le capot frontal (27).

7. Disposition selon une des revendications précédentes, **caractérisée par le fait que** l'extrémité du dispositif de réglage (17, 28) se trouvant côté capot frontal est assemblée par adhérence au moyen d'un logement en forme de poêle avec un segment principalement en forme de goujon (18) sur le capot frontal (27).

8. Disposition selon revendication 7, **caractérisée par le fait que** le segment principalement en forme de goujon (18) situé sur le capot frontal (27) puisse être soulevé du logement en forme de poêle (17) lors d'une commande normale du dispositif à charnière (1) pour l'ouverture du capot frontal (27) au moyen d'une quadruple articulation (3, 4).

9. Disposition selon une des revendications précédentes, **caractérisée par le fait que** lors d'un déblocage en cas de collision du réservoir d'énergie (2) le logement en forme de poêle (17) du dispositif de réglage (17, 28) fait déplacer brusquement le segment en forme de goujon (18) sur le capot frontal (27) en direction de la position soulevée du capot frontal (27) et le levier pivotant (15) défait cependant son assemblage par adhérence (16, 14) avec le capot frontal (27) sur son extrémité fixée de manière amovible sur le capot frontal (27) et pivote autour de son articulation tournante (6) sur l'autre extrémité par rapport au capot frontal (27).

10. Disposition selon une des revendications précédentes, **caractérisée par le fait qu'**en état de repos du capot frontal (27) l'extrémité du dispositif de réglage (17, 28) située côté capot frontal avec le logement en forme de poêle (17) est disposée et fixée côté carrosserie de manière à ce que le segment essentiellement en forme de goujon (18) du capot frontal (27) est pris dans le logement en forme de poêle (17).

11. Disposition selon une des revendications précédentes, **caractérisée par le fait que** l'articulation tournante (6) du levier pivotant (15) sur le capot frontal (27) et le segment en forme de goujon (18) du capot frontal (27) présentent un point de pivotement identique.

12. Disposition selon une des revendications précédentes, **caractérisée par le fait que** par le mouvement rotatif du levier pivotant (15) d'une part et le mouvement de réglage (7) du dispositif de réglage (17, 28) d'autre part, le capot frontal (27) réalise en cas de collision un simple mouvement pivotant autour d'un dispositif de verrouillage disposé à l'avant du véhicule sur le capot frontal (27) sans déportements relatifs du capot frontal (27) dans le sens de la longueur de véhicule relatif au dispositif de verrouillage.

13. Disposition selon une des revendications précédentes, **caractérisée par le fait que** le réservoir d'énergie (2) dispose d'un ressort mécanique précontraint, notamment un ressort à boudins (2).

14. Disposition selon une des revendications précédentes, **caractérisée par le fait que** le dispositif de réglage (17, 28) présente un segment essentiellement en forme de barre qui est disposé à l'intérieur du ressort à boudins (2) et tenu sur une extrémité contre la force du ressort à boudins (2) précontraint et qui porte sur son autre extrémité le logement en forme de poêle (17) pour le segment en forme de goujon (128) sur le capot frontal (27).

15. Disposition selon une des revendications précédentes, **caractérisée par le fait que** le réservoir d'énergie (2) en état de repos est tenu en état de précontrainte au moyen d'un dispositif de déclenchement (9, 10, 11).

16. Disposition selon une des revendications précédentes, **caractérisée par le fait que** le dispositif de déclenchement (9, 10,11) en cas de collision puisse être commandé au moyen d'un acteur (10) et débloque le réservoir d'énergie (2) depuis son état précontraint au moyen de dispositifs de levage (10) mécaniquement amplifiés.

17. Disposition selon la revendication 16, **caractérisée par le fait que** l'acteur (11) dispose d'un commutateur électromécanique.

18. Disposition selon une des revendications précédentes, **caractérisée par le fait que** le dispositif de déclenchement (9, 10,11) dispose d'un segment en forme de crochet (9) qui, en état de repos, saisie à l'arrière un segment correspondant (13) du segment en forme de barre (28) du dispositif de réglage (17, 28) et stabilise la position du dispositif de réglage (17, 28) contre l'impact du réservoir d'énergie (2).

19. Disposition selon la revendication 18, **caractérisée par le fait qu'**après le déclenchement du capot frontal, le segment en forme de crochet (9) du dispositif de déclenchement (9, 10, 11), le dispositif de réglage (17, 28) et le réservoir d'énergie (2) peuvent être remis à l'état initial et commandés de nouveau.

20. Disposition selon une des revendications précédentes, **caractérisée par le fait que** le réservoir d'énergie (2) dispose d'un moyen fluide.

21. Disposition selon une des revendications précédentes, **caractérisée par le fait que** le levier pivotant (15) et le segment en forme de goujon (18) sont fixés sur le capot frontal au moyen d'un élément de montage commun (5).

22. Disposition selon une des revendications précédentes, **caractérisée par le fait que** le dispositif à charnière (1) peut être bloqué après le soulèvement du capot frontal (27) en état soulevé par rapport à l'état au repos.

23. Disposition selon une des revendications précédentes, **caractérisée par le fait que** sur le levier pivotant (15) et / ou sur le ou les bras (3, 4) est disposé au moins un dispositif de verrouillage qui bloque de manière antagoniste le mouvement relatif du levier pivotant (15) et / ou des bras (3, 4), le capot frontal étant soulevé.

24. Disposition selon la revendication 23, **caractérisée par le fait qu'**au moins un dispositif de verrouillage dispose d'une saillie qui, en état de repos du capot frontal (27) par rapport à l'état au repos, saisie une contre-forme correspondante et bloque le levier pivotant (15) et / ou les bras (3, 4) lorsque le capot frontal se trouve en état soulevé.
